# EUROPÄISCHE PATENTSCHRIFT

(11) **EP 0 881 134 B1**
(45) Veröffentlichungstag und Bekanntmachung des Hinweises auf die Patenterteilung: **27.11.2002**
(21) Anmeldenummer: 98106942.0
(22) Anmeldetag: 16.04.1998
(51) Int. Cl.: B60T 17/08

(54) **Kraftspeicher**
Power accumulator
Accumulateur d'energie

(30) Priorität: 30.05.1997 DE 19722591
(43) Veröffentlichungstag der Anmeldung: 02.12.1998
(73) Patentinhaber: DaimlerChrysler AG, 70567 Stuttgart (DE)
(72) Erfinder: Deist, Lothar, Dipl.-Ing., 36211 Alheim (DE); Frank, Helge, Dipl.-Ing., 34134 Kassel (DE)
(74) Vertreter: Akers, Noel James

(56) Entgegenhaltungen:
- DE-A- 3 831 459
- DE-A- 4 217 164
- DE-A- 4 239 233
- DE-U- 9 106 646

## Beschreibung

Die Erfindung bezieht sich auf einen Kraftspeicher gemäß dem Oberbegriff des Anspruchs 1. Ein Kraftspeicher dieser Art ist bekannt. Hauptanwendungen dieses Kraftspeichers sind Bremsen (Fahrzeugpark-, Sicherheits- oder Feststellbremsen) bei Fahrzeugen oder Reibungskupplungen bei Fahrzeugen und Antrieben jeglicher Art.

Nebenanwendungen sind jegliche technische Einrichtungen, die ferngesteuert die Ausübung einer zeitlich unbegrenzt wirkenden Kraft auch bei Verlust des energieübertragenden Glieds, beispielsweise Druckluft oder eine Flüssigkeit, erfordern - wie Bremsen und Kupplungen der allgemeinen Antriebstechnik.

Bekannt sind Federspeicher für Fahrzeugbremsen (Eisenbahn-, Automobil- und Flugzeugfahrwerke) und Reibungskupplungen, deren Wirkung auf einem elastischen Glied, meist einer Schraubenfeder, beruht, welches im gelösten Zustand der Bremse oder im eingerückten Zustand der Kupplung von einem unter Druck stehenden Medium, wie Druckluft oder Hydrauliköl, oder von einer elektromagnetisch erzeugten Kraft komprimiert wird und durch seine elastische Deformierung die Bremse löst oder die Kupplung einrückt. Bei Wegfall des Drucks oder Entfall der elektromagnetischen Kraft wird die Bremse durch die im elastischen Glied gespeicherte Energie angelegt bzw. die Kupplung ausgerückt und auch bei Verlust des energieübertragenden Mediums (beispielsweise Druckluft) ohne weiteres Zutun für eine unbegrenzte Zeitdauer in diesem Zustand gehalten.

Die Reibbeläge von Bremsen sowie Kupplungen unterliegen betriebsbedingt dem Verschleiß. Dies führt bei der Verwendung eines Federspeichers insbesondere für Bremsen dazu, daß durch den infolge Verschleiß sich verlängernden Anlegehub die zum Anpressen der Bremsbeläge verfügbare Federkraft in nachteiliger Weise abnimmt. Um die Verwendung überlanger Federn mit weicher Charakteristik zu vermeiden, ist in nachteiliger Weise die Verwendung eines zusätzlichen Stellers, meist ausgeführt als selbsttätiger Schrauben- oder Ratschenmechanismus, für die Konstanthaltung des Anlegehubs der Bremse erforderlich.

Dokument DE-A-38 31 459 beschreibt einen Zylinder mit einem verschiebbaren Kolben, der beidseitig hydraulisch beaufschlagbar ist. Der Kolben ist mit einem Sperrmechanismus versehen. Ein Keil dient zum Auseinanderdrücken von Züngen, so daß sie den Gesamtkolben gegen den Zylinderwand festklemmen können. Ein Feder beaufschlagt den Keil.

Der Erfindung liegt die Aufgabe zugrunde, einen Kraftspeicher der eingangs genannten Art anzugeben, der einen Ausgleich verschleißbedingter Hubwegveränderungen bei der Betätigung einer technischen Einrichtung, wie beispielsweise einer Bremse oder einer Kupplung, ermöglicht.

Diese Aufgabe wird in Verbindung mit den Merkmalen des Oberbegriffes erfindungsgemäß durch die im Kennzeichen des Anspruchs 1 angegebenen Merkmale gelöst.

Die mit der Erfindung erzielbaren Vorteile bestehen insbesondere darin, daß die Wirkung der technischen Einrichtung und des Kraftspeichers stets unabhängig von dem aktuellen, verschleißbedingten Anlegehub einer Bremse oder Kupplung oder einer sonstigen Hubwegveränderung einer technischen Einrichtung ist. Auch bei Verlust des energieübertragenden Mediums ist eine sichere Blockierung des Kraftspeichermechanismusses gewährleistet, d. h. die Wirkung des Kraftspeichers ist zeitlich unbegrenzt. Erst bei erneuter Kraftbeaufschlagung des Mechanismusses wird dieser gelöst und der Kraftspeicher freigegeben. Durch den Entfall des sonst zum Ausgleich von Hubweg-Veränderungen erforderlichen Stellmechanismusses ist eine signifikante Kostenersparnis möglich, insbesondere bei Eisenbahnzügen mit einer Vielzahl von einzelnen Bremsen.

Der Kraftspeicher ist sowohl im angelegten als auch im gelösten Zustand bistabil. Hierdurch ist beispielsweise bei Verwendung von Druckluft oder Hydrauliköl als Medium eine Schlauchüberwachung des das Medium führenden Schlauches entbehrlich, welche das ungewollte Anlegen einer Federspeicherbremse bei Schlauchbruch verhindert.

Die Erfindung wird nachstehend anhand der in der Zeichnung dargestellten Ausführungsbeispiele erläutert. Es zeigen:
- Fig. 1: einen druckluftbeaufschlagbaren Bremszylinder mit den zugehörigen Ansteuerungen,
- Fig. 2: interessierende Details des Haltemechanismusses des Bremszylinders,
- Fig. 3: eine alternative Ausgestaltung des Haltemechanismusses.

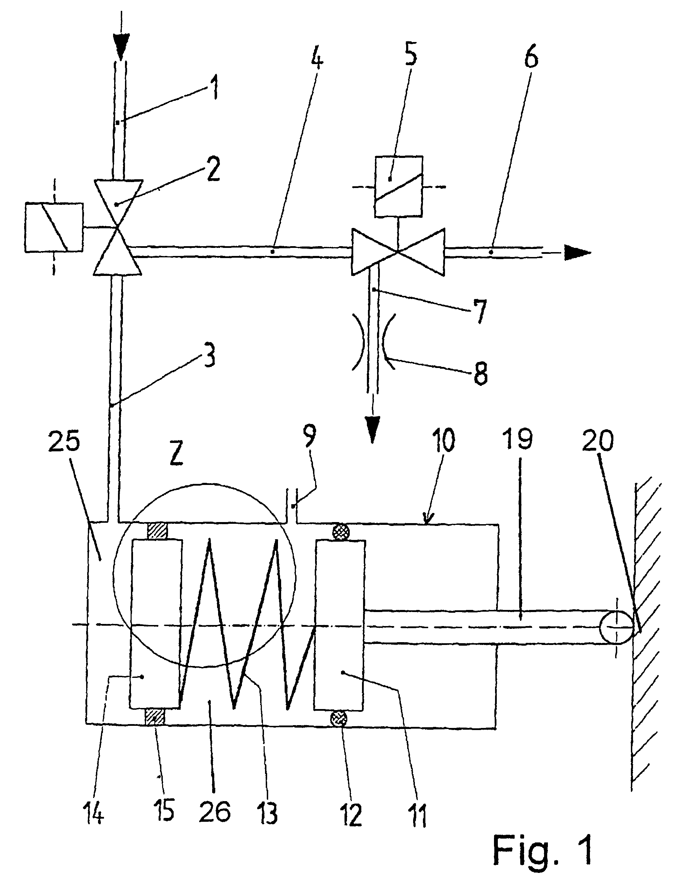

In Fig. 1 ist ein Bremszylinder - allgemein ein Zylinder mit mindestens zwei unabhängig voneinander kraftbeaufschlagbaren Kolben - mit den zugehörigen Ansteuerungen gezeigt. In dem Bremszylinder 10 befindet sich ein Kolben 11 mit Kolbenstange 19 zur Betätigung einer Bremseinrichtung (oder Kupplungseinrichtung oder sonstigen technischen Einrichtung) 20 und einer Dichtung 12 zur Abdichtung des Kolbens 11 gegenüber dem Bremszylinder. Bei Beaufschlagung des Bremszylinders 10 (Zylindervolumen 26) mit Druckmedium über eine Zuführung 9 wird der Kolben 11 nach rechts verschoben und übt für die Zeitdauer der Druckbeaufschlagung eine Kraft über die Kolbenstange 19 aus.

Zur Bildung des ferngesteuerten, zur Ausübung einer zeitlich unbegrenzt auf die technische Einrichtung - hier die Bremse - wirkenden Kraft dienenden Kraftspeichers ist ein frei beweglicher Kolben 14 im Bremszylinder 10 vorgesehen. Zur Ausübung einer zeitlich unbegrenzten Kraft wird der Kolben 14 mit Haltemechanismus 15 durch Beaufschlagung des Bremszylinders 10 (Zylindervolumen 25) mit Druckmedium über eine Zuführung 3 von seiner Ausgangsstellung aus nach rechts verschoben.

Durch Gleiten des Kolbens 14 nach rechts wird ein zwischen beiden Kolben 11, 14 befindliches elastisches Glied 13 - vorzugsweise eine Schraubenfeder - gegen den Kolben 11 komprimiert und übt die gewünschte Kraft auf die Kolbenstange 19 und damit auf die Bremse, Kupplung oder sonstige technische Einrichtung aus. Nach Entweichen des den Kolben 14 betätigenden Mediums (aus dem Zylindervolumen 25) hält der Haltemechanismus 15 den Kolben 14 in seiner momentanen Lage fest, so daß das elastische Glied 13 gegen den Kolben 11 zeitlich unbegrenzt komprimiert bleibt.

Zum Lösen des Kraftspeichers (Federspeichers) wirkt erneut über die Zuführung 3 Druckmedium auf den Kolben 14. Dadurch wird der Haltemechanismus 15 entriegelt. Beim nachfolgenden Entweichen des Mediums aus dem Zylindervolumen 25 über die Zuführung 3 gleitet der Kolben 14 nach links in seine Ausgangsstellung zurück und der Kraftspeicher ist gelöst.

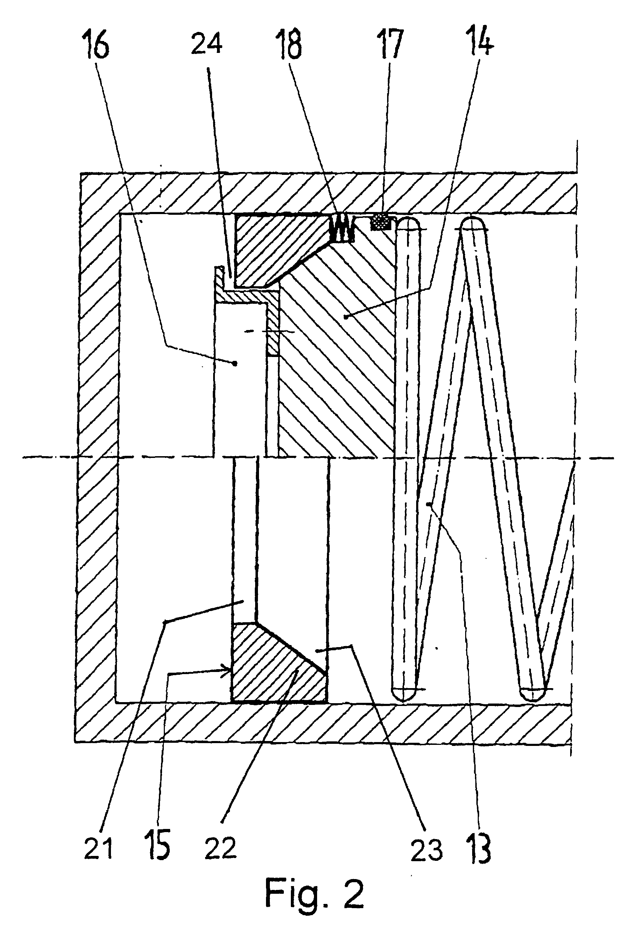

Fig. 2. zeigt den beispielhaften Aufbau eines im Bremszylinder 10 befindlichen Haltemechanismusses 15 im Detail. Der Haltemechanismus 15 besteht aus den Baukomponenten mit den Ziffern 16/17/18/21/22/23/24. Ein geschlitzter oder geteilter Federring 21 spreizt sich durch eine definierte Federspannung gegen die Innenseite des Bremszylinders 10. Der Kolben 14, der über eine Dichtung 17 in den Bremszylinder 10 eingedichtet ist, kann mit seiner kegelig bzw. keilförmig ausgeführten Rückseite 23 in die ebenfalls kegelige oder keilförmige Innenkontur 22 des Federrings 21 gleiten. Ein Haltering 16, fest mit der Rückseite des Kolben 14 verbunden, erlaubt ein begrenztes freies Spiel 24 des Federrings 21 zwischen dem Haltering 16 und dem Kolben 14. Auf dem Umfang des Kolbens 14 verteilte Federn 18 üben eine definierte, den Federring 21 vom Kolben 14 abhebende Kraft aus.

Wie aus den Fig. 1 und 2 hervorgeht, wird zum Anlegen des Kraftspeichers das Zylindervolumen 25 von einer Druckquelle 1 (das Druckmedium ist beispielsweise Druckluft oder Hydrauliköl) mit Zuführung über ein Ventil 2 und die Zuführung 3 druckbeaufschlagt, wodurch der kraftbeaufschlagte Kolben 14 von seiner Ausgangslage aus gegen das elastische Glied (Feder) 13 und den Kolben 11 gedrückt wird. Die Federn 18 drücken den Federring 21 gegen den Haltering 16 (Vorspannung), d.h. es ist keine Klemmwirkung zwischen Kolben 14 und Bremszylinder 10 gegeben.

Über die Zuführung 3, das Ventil 2, eine Verbindungsleitung 4, ein Ventil 5 und einen Auslaß 6 wird das Zylindervolumen 25 links des Kolbens 14 nachfolgend über einen großen Querschnitt "schlagartig" druckentlastet. Diese plötzliche Druckentlastung bewirkt eine plötzliche Kraftentlastung des Kolbens 14 vom Kolben 11 weg, wobei die Kraft des elastischen Gliedes 13 weiter auf den Kolben 14 wirkt.

Das elastische Glied (Feder) 13 beschleunigt bei plötzlichem Wegfall des Drucks im Zylindervolumen 25 den Kolben 14 stark in Richtung seiner Ausgangslage (nach links). Infolge der Trägheit des Federrings 21 wird die Vorspannung der Federn 18 überwunden und die kegelige Rückseite 23 des Kolben 14 gleitet in die kegelige Innenkontur 22 des Federrings 21 und spreizt diesen hierdurch auf. Infolgedessen klemmt sich der Federring 21 bei geeigneter Bemessung des Kegelwinkels von 22/23 zwischen der Innenwandung des Bremszylinders 10 und dem Kolben 14 fest, d. h. der Kolben 14 ist im Bremszylinder 10 blockiert.

Durch den begrenzten Rückhub während der plötzlichen Druckentlastung im Zylindervolumen 25 des Bremszylinders 10 ist die verbleibende Federspannung des elastischen Glieds (Feder) 13 etwas geringer als die ursprünglich im Zylindervolumen 26 aufgebrachte Druckkraft.

Zum Lösen des Kraftspeichers wird das Zylindervolumen 25 des Bremszylinders 10 - und damit der Kolben 14 - erneut über die Druckquelle 1, das Ventil 2 und die Zuführung 3 druckbeaufschlagt. Dies entspricht einer Kraftbeaufschlagung des Kolbens 14 zum Kolben 11 hin. Die überschüssige Kraftdifferenz zwischen der über die Druckquelle 1 im Zylindervolumen 25 erzeugten Druckkraft und der Federkraft des elastischen Glieds 13 (siehe auch "Anlegen") drückt den Kolben 14 aus dem kegelförmigen bzw. keilförmigen Abschnitt des Federringes 21. Durch den Entfall der mittels des elastischen Glieds 13 erzeugten Spreizkraft auf den Kolbens 14 drücken die Federn 18 den Federring 21 so weit vom Kolben 14 ab, bis der Federring am Haltering 16 zum Anschlag kommt und das freie Spiel 24 zu Null wird. Dies ermöglicht das Gleiten des Kolbens 14 innerhalb des Bremszylinders 10.

Über die Zuführung 3, das Ventil 2, die Verbindungsleitung 4, das Ventil 5 und einen Auslaß 7 mit nachgeschalteter Drossel 8 werden der Zylinderraum 25 und damit der Kolben 14 anschließend druckentlastet. Da die Drossel 8 das Druckmedium nur langsam entweichen läßt, bewegt sich der Kolben 14 derart langsam (nach links) zurück, daß die Federn 18 den Federring 21 auch während der Bewegung am Haltering 16 angelegt lassen und der Kolben 14 bis in seine Ausgangsstellung zurückgleitet, wodurch das elastische Glied (Feder) 13 entspannt wird. Dies entspricht einem langsamen Kraftabbau des Kolbens 14 weg vom Kolben 11. Erreicht der Kolben 14 seine Ausgangsstellung, ist der Kraftspeicher vollständig gelöst.

Um ein zeitlich stets gleichbleibendes Ansprechen der Bremse, Kupplung oder sonstigen technischen Einrichtung unabhängig von ihrem Verschleißzustand und den damit verursachten verschleißbedingten Hubwegveränderungen zu gewährleisten, muß das Zylindervolumen 26, das über die Zuleitung 9 zwischen den Kolben 11 und 14 von einer Druckquelle beaufschlagt wird, annähernd konstant bleiben, auch wenn infolge von Belagverschleiß bzw. Hubwegveränderungen während der Betriebsdauer der Kolben 11 weiter nach rechts "wandert".

Dieser selbsttätige Ausgleich von verschleißbedingten Hubwegveränderungen kann in einfacher Weise während des oben beschriebenen Lösevorgangs des Kolbens 14 realisiert werden. Hat sich der Kolben 11 genügend weit aus der Lage "Bremse angelegt" nach links bewegt, was beispielsweise durch Messung innerhalb oder außerhalb des Bremszylinders festgestellt werden kann, schaltet das Ventil 5 von Auslaß 7 zu Auslaß 6 um. Das Zylindervolumen 25 und damit der Kolben 14 werden nach erfolgtem Umschalten "schlagartig" druckentlastet und der Kolben 14 klemmt sich hierdurch über den Federring 21 im Bremszylinder 10 fest, wie für den Anlegevorgang beschrieben.

Dadurch kann der Löseweg des Kolbens 14 so beeinflußt und bestimmt werden, daß im gelösten Zustand des Kraftspeichers (und der Bremse oder Kupplung oder technischen Einrichtung) das Zylindervolumen 26 zwischen den Kolben 11 und 14 immer annähernd gleich bleibt.

Da keine Addition der durch den Kraftspeicher und den Betriebsdruck (siehe Zylindervolumen 26) erzeugten Kräfte erfolgt, kann vorteilhaft eine sonst erforderliche Entlastungsschaltung gegen Überbeanspruchung von Kolbenstange 19 und Bremseinrichtung oder Kupplungseinrichtung 20 entfallen.

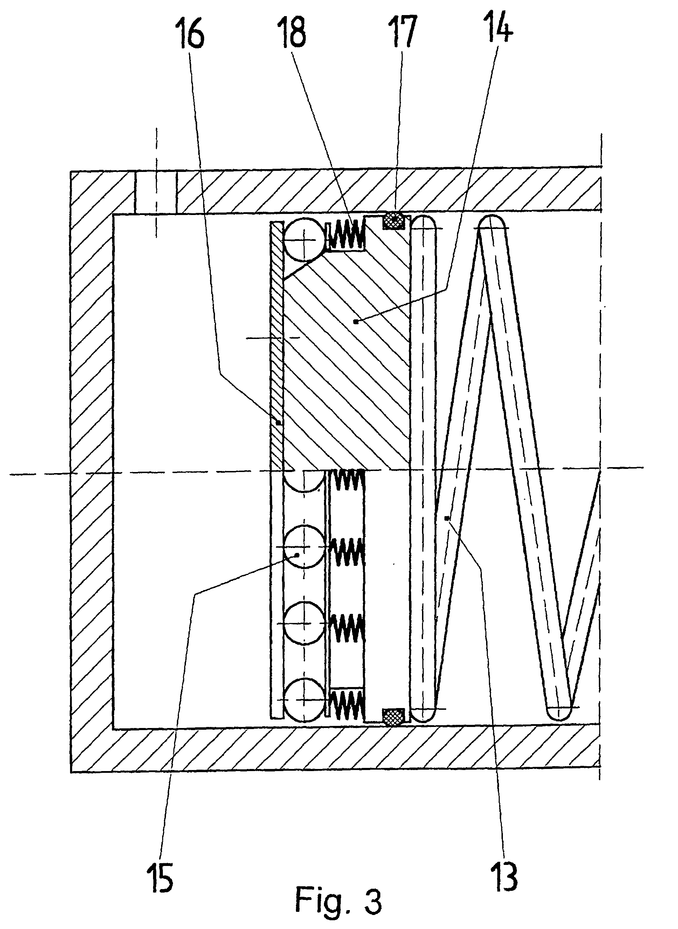

In Fig. 3 ist eine alternative Ausgestaltung des Haltemechanismusses dargestellt. Es sind wiederum der Kolben 14 mit Dichtung 17, das elastische Glied 13 und die Federn 18 zu erkennen. Die Federn 18 pressen über eine Druckscheibe gegen einen aus einer Vielzahl von ringförmig längs des Umfanges angeordneten Kugeln bestehenden Haltemechanismus 15, wobei die Kugeln durch den Haltering 16 in ihrer Beweglichkeit begrenzt werden. Kolben 14 und Haltering 16 können einstückig gefertigt sein. Der Kolben 14 weist wiederum eine kegelige oder keilförmige Rückseite 23 auf, die ein Verklemmen der Kugeln gegen die Kolbenwandung und damit das Blockieren des Kolbens 14 innerhalb des Zylinders oder eine freie Beweglichkeit der Kugeln und damit das Gleiten des Kolbens 14 ermöglicht. Die Funktionsweise entspricht der vorstehend für den Federring 21 als Haltemechanismus erläuterten Art.

Auch wenn im vorstehend erläuterten Ausführungsbeispiel vorzugsweise Druckluft als energieübertragendes Medium verwendet wird, ist die Erfindung nicht hierauf beschränkt, es kann als energieübertragendes Medium auch eine Flüssigkeit (Hydrauliköl) herangezogen werden. Des weiteren ist es auch möglich, die zum Anlegen des Kraftspeichers auf den Kolben 14 zum Kolben 11 hin einwirkenden Kräfte elektromagnetisch zu erzeugen.

## Patentansprüche

1. Kraftspeicher mit einem Zylinder (10) mit mindestens zwei unabhängig voneinander kraftbeaufschlagbaren Kolben (11, 14), wobei sich zwischen beiden Kolben ein elastisches Glied (13), vorzugsweise eine Feder, befindet, der erste Kolben (11) zur Betätigung einer technischen Einrichtung (20), vorzugsweise einer Bremse oder einer Kupplung, dient und der zweite Kolben (14) zur ferngesteuerten Ausübung einer zeitlich unbegrenzt auf die technische Einrichtung wirkenden Kraft dient, indem der zweite Kolben über das komprimierte elastische Glied (13) gegen den ersten Kolben drückt, **dadurch gekennzeichnet,**
**daß** der zweite Kolben (14) mit einem Haltemechanismus (15) versehen ist, der bei Kraftbeaufschlagung des zweiten Kolbens (14) zum ersten Kolben (11) hin ein Gleiten des zweiten Kolbens innerhalb des Zylinders (10) gestattet, wodurch das elastische Glied (13) komprimiert wird,
der bei plötzlicher Kraftentlastung des zweiten Kolbens (14) vom ersten Kolben (11) weg die Relativbewegung des zweiten Kolbens gegenüber dem Zylinder (10) blockiert und der
bei Kraftbeaufschlagung des zweiten Kolbens zum ersten Kolben hin mit anschließender langsamer Kraftentlastung des zweiten Kolbens (14) vom ersten Kolben (11) weg ein Gleiten des zweiten Kolbens innerhalb des Zylinders (10) gestattet.

2. Kraftspeicher nach Anspruch 1, **dadurch gekennzeichnet, daß** der Abstand zwischen beiden Kolben (11, 14) im entspannten Zustand des elastischen Glieds (13) fest vorgegeben wird, wobei die Gleitbewegung des zweiten Kolbens vom ersten Kolben weg durch entsprechende Kraftbeaufschlagung beendet wird, wenn der vorgegebene Abstand erreicht ist.

3. Kraftspeicher nach Anspruch 1 oder 2, **dadurch gekennzeichnet, daß** der Haltemechanismus (15) einen geschlitzten oder geteilten Federring (21) aufweist, dessen kegelige oder keilförmige Innenkontur (22) in die kegelige oder keilförmige Rückseite (23) des zweiten Kolbens (14) eingreift und dessen freies Spiel (24) durch einen mit dem zweiten Kolben verbundenen Haltering (16) begrenzt wird, wobei Federn (18) den Federring (21) vom zweiten Kolben abheben.

4. Kraftspeicher nach Anspruch 1 oder 2, **dadurch gekennzeichnet, daß** der Haltemechanismus (15) eine Vielzahl von Kugeln aufweist, die in die kegelige oder keilförmige Rückseite (23) des zweiten Kolbens (14) eingreifen und deren freies Spiel durch einen Haltering (16) des zweiten Kolbens begrenzt wird, wobei Federn (18) die Kugeln vom zweiten Kolben (14) abheben.

5. Kraftspeicher nach einem der Ansprüche 1 bis 4, **dadurch gekennzeichnet, daß** der Zylinder (10) zwei druckbeaufschlagbare Zylindervolumina (25, 26) für die Kraftbeaufschlagung der Kolben (11, 14) aufweist, wobei die Druckbeaufschlagung pneumatisch oder hydraulisch erfolgt.

6. Kraftspeicher nach Anspruch 5, **gekennzeichnet durch** ein mit einem Zylindervolumen (25) in Verbindung stehendes Ventil (5), welches das Zylindervolumen für eine plötzliche Kraftentlastung mit einem Auslaß (6) ohne Drossel und für eine langsame Kraftentlastung mit einem Auslaß (7) mit Drossel (8) verbindet.

## Claims

1. Power accumulator having a cylinder (10) with at least two pistons (11, 14) which can be powered independently of each other, a flexible element (13), preferably a spring, being located between the two pistons, the first piston (11) serving for the actuation of a technical device (20), preferably a brake or a clutch, and the second piston (14) serving for the remote-controlled exertion of a force acting for an unlimited time on the technical device, in that the second piston presses against the first piston via the compressed flexible element (13), **characterized in that** the second piston (14) is provided with a holding mechanism (15), which allows sliding of the second piston within the cylinder (10) when the second piston (14) is powered towards the first piston (11), whereby the flexible element (13) is compressed, which blocks the relative movement of the second piston with respect to the cylinder (10) when the first piston (11) is suddenly relieved of the force of the second piston (14) and which allows sliding of the second piston within the cylinder (10) when the second piston is powered towards the first piston with subsequent slow relief of the force on the first piston (11) by the second piston (14).

2. Power accumulator according to Claim 1, **characterized in that** the distance between the two pistons (11, 14) in the relaxed state of the flexible element (13) is predetermined as a fixed value, the sliding movement of the second piston away from the first piston being ended by appropriate power being applied when the predetermined distance is reached.

3. Power accumulator according to Claim 1 or 2, **characterized in that** the holding mechanism (15) has a slit or divided spring ring (21), the tapered or wedge-shaped inner contour (22) of which engages in the conical or wedge-shaped rear side (23) of the second piston (14) and the free play (24) of which is limited by a holding ring (16) connected to the second piston, springs (18) lifting the spring ring (21) off the second piston.

4. Power accumulator according to Claim 1 or 2, **characterized in that** the holding mechanism (15) has a multiplicity of balls, which engage in the tapered or wedge-shaped rear side (23) of the second piston (14) and the free play of which is limited by a holding ring (16) of the second piston, springs (18) lifting the balls off the second piston (14).

5. Power accumulator according to one of Claims 1 to 4, **characterized in that** the cylinder (10) has two cylinder volumes (25, 26) which can be pressurized for powering the pistons (11, 14), the pressurization taking place pneumatically or hydraulically.

6. Power accumulator according to Claim 5, **characterized by** a valve (5) which is in connection with a cylinder volume (25) and, for sudden force relief, connects the cylinder volume to an outlet (6) without a restrictor and, for slow force relief, connects the cylinder volume to an outlet (7) with a restrictor (8).

## Revendications

1. Accumulateur d'énergie comprenant un cylindre (10) avec au moins deux pistons (11, 14) pouvant être sollicités par une force indépendamment l'un de l'autre, un organe élastique (13), de préférence un ressort, se trouvant entre les deux pistons, le premier piston (11) servant à l'actionnement d'un dispositif technique (20), de préférence un frein ou un embrayage, et le deuxième piston (14) servant à exercer par commande à distance une force agissant de manière non limitée dans le temps sur le dispositif technique, le deuxième piston pressant par le biais de l'organe élastique comprimé (13) contre le premier piston,
**caractérisé en ce que**
le deuxième piston (14) est pourvu d'un mécanisme de retenue (15) qui permet, lors de la sollicitation par une force du deuxième piston (14), un glissement du deuxième piston dans le cylindre (10) en direction du premier piston (11), ce qui comprime l'organe élastique (13),
qui, en cas de relâchement soudain de la force du deuxième piston (14) à l'écart du premier piston (11), bloque le mouvement relatif du deuxième piston par rapport au cylindre (10) et qui,
en cas de sollicitation par une force du deuxième piston vers le premier piston, permet, avec un relâchement de force subséquent lent du deuxième piston (14) à l'écart du premier piston (11), un glissement du deuxième piston dans le cylindre (10).

2. Accumulateur d'énergie selon la revendication 1, **caractérisé en ce que** la distance entre les deux pistons (11, 14) dans l'état relâché de l'organe élastique (13) est prédéterminée fixement, le mouvement de glissement du deuxième piston à l'écart du premier piston étant terminé par une sollicitation correspondante par une force, lorsque la distance prédéterminée est atteinte.

3. Accumulateur d'énergie selon la revendication 1 ou 2, **caractérisé en ce que** le mécanisme de retenue (15) présente une rondelle élastique fendue ou divisée (21) dont le contour interne (22) en forme de cône ou de clavette vient en prise dans la face arrière (23) en forme de cône ou de clavette du deuxième piston (14) et dont le jeu libre (24) est limité par une bague de retenue (16) reliée au deuxième piston, des ressorts (18) soulevant la rondelle élastique (21) du deuxième piston.

4. Accumulateur d'énergie selon la revendication 1 ou 2, **caractérisé en ce que** le mécanisme de retenue (15) présente une pluralité de billes qui viennent en prise dans la face arrière (23) en forme de cône ou de clavette du deuxième piston (14) et dont le jeu libre est limité par une bague de retenue (16) du deuxième piston, des ressorts (18) soulevant les billes du deuxième piston (14).

5. Accumulateur d'énergie selon l'une quelconque des revendications 1 à 4, **caractérisé en ce que** le cylindre (10) présente deux volumes cylindriques (25, 26) pouvant être sollicités par une pression pour la sollicitation par une force des pistons (11, 14), la sollicitation par une pression s'effectuant de manière pneumatique ou hydraulique.

6. Accumulateur d'énergie selon la revendication 5, **caractérisé par** une soupape (5) connectée à un volume cylindrique (25), qui connecte le volume cylindrique pour un relâchement soudain de la force à une sortie (6) sans étranglement, et pour un relâchement lent de la force à une sortie (7) avec étranglement (8).
